Europäisches Patentamt

European Patent Office

Office européen des brevets

(19)

(11) Publication number: **0 087 913**
**B1**

(12) **EUROPEAN PATENT SPECIFICATION**

(45) Date of publication of patent specification: **21.09.88**

(51) Int. Cl.⁴: **G 11 B 23/04**

(21) Application number: **83300929.3**

(22) Date of filing: **22.02.83**

(54) **A tape cassette.**

(30) Priority: **26.02.82 JP 28007/82 u**

(43) Date of publication of application:
**07.09.83 Bulletin 83/36**

(45) Publication of the grant of the patent:
**21.09.88 Bulletin 88/38**

(84) Designated Contracting States:
**DE FR GB NL**

(56) References cited:
**FR-A-2 433 221**
**GB-A-2 029 372**
**US-A-2 676 766**
**US-A-2 941 741**
**US-A-3 669 384**
**US-A-3 921 927**
**US-A-3 934 839**

(73) Proprietor: **Matsushita Electric Industrial Co., Ltd.**
**1006, Oaza Kadoma**
**Kadoma-shi Osaka-fu, 571 (JP)**

(72) Inventor: **Shibaike, Narito**
**5-6, Minamikeiganoso-7-chome**
**Habikino-shi (JP)**
Inventor: **Kikuya, Satoshi**
**11-104, Ikuno-4-chome**
**Katano-shi (JP)**
Inventor: **Minamide, Seiko**
**1-6-9, Higashitomigaoka**
**Nara-shi (JP)**

(74) Representative: **Woodin, Anthony John et al**
**Fitzpatricks Europe House Box No. 88 World Trade Centre East Smithfield**
**London E1 9AA (GB)**

Courier Press, Leamington Spa, England.

## Description

Background of the invention

The present invention relates to a tape cassette which is to be loaded on a magnetic recording and reproducing apparatus.

With a magnetic recording and reproducing apparatus and the like using a tape cassette, it is indispensable to the operation of the apparatus to load reels received in the tape cassette on the reel bases of the apparatus. The magnetic recording and reproducing apparatus considerably depends on smoothness, easiness and preciseness of the loading and positioning of the tape cassette on the apparatus for its over-all performance and handiness. Accordingly, various expedients have been done in connection with the shape of reels in the tape cassette and shapes of reel bases in the apparatus. Arrangement of reels in a prior tape cassette and prior reel bases, on which the reels are loaded, will be described hereinbelow with reference to several accompanying drawings.

Referring first to Figure 1, there is shown a tape cassette 4 which receives therein a pair of reels 11 (one of which is illustrated). Each reel 11 includes a reel hub 3 with a magnetic tape wound therearound, an upper flange 2 and a lower flange 3a integrally formed with the reel hub 3, these Figures 2 and 3a being adapted to limit widthwise movement of the magnetic tape 1. A projection 3d provided centrally at the top of the reel hub 3 is biased by one end of a reel spring 5 in the widthwise direction of the tape cassette 4, the other end of the spring being secured to the tape cassette 4.

The reel hub 3 if formed at its lower end with an open ended recess which in turn is provided at its inner periphery with a plurality of radially extending pawls 3b. The pawls are adapted to engage with pawl pieces 8a of a pawl 8 which is rotatable integrally with a body of the magnetic recording and reproducing apparatus. A abutment 3c extending beyond the lower flange 3a is formed at the lower, thicknesswise end of the tape cassette 4 for abutting against the reel base 10 provided on the body of the apparatus. The abutment 3c has a larger diameter than that of an opening 4a formed at a lower portion 4' of the tape cassette 4.

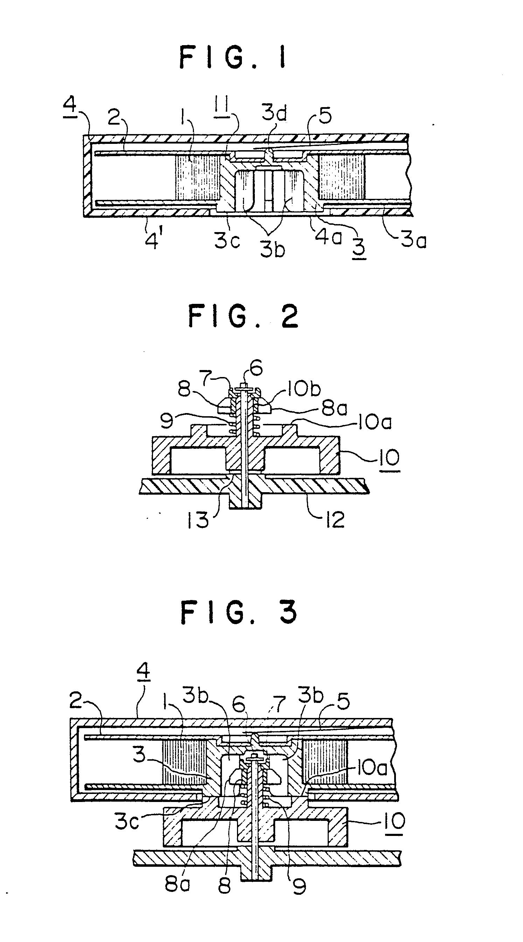

The constructon of the reel base will be explained with reference to Figure 2 which permits the tape cassette as constructed in the above manner to be loaded on the magnetic recording and reproducing apparatus and a magnetic tape to run for recording and reproduction. In the drawing, reference numeral 10 designates a reel base rotatably mounted on a reel shaft 6 which is secured to a base plate 12 of the apparatus. A washer 13 is axially interposed between the reel base 10 and the reel shaft 6 of the base plate 12. A top end 10a of the reel base 10 constitutes an abutment surface for abutting against the abutment 3c of the reel hub 3 and limits height and inclination of the reel 11 relative to the base plate 12. A central, hexagonal column 10b of the reel base 10 is adapted to slidably engage the pawl 8 having a plurality of pawl pieces 8a which are adapted to engage with the pawl 3b of the reel hub 3. The engagement between the column 10b and the pawl 8 is assisted by a pawl spring 9. The pawl 8 is biased upward by the pawl spring 9 to be vertically moveable along the outer peripheral surface of the column 10b, and is limited in its movement by engagement with the underside of a reel cap 7.

In Figure 3, a tape cassette is shown as being loaded on the reel base as described above. The abutment 3c of the reel hub 3 abuts against the top end 10a of the reel base 10 and is assisted by the biasing force of the reel moving 5 toward the reel base 10 to limit the height of the reel 11. In this position, the outer periphery of the reel cap 7 engages with the inner ends of the pawls 3b of the reel hub 3 to center the reel 11. The pawls 3b of the reel hub 3 engage with the pawl pieces 8a of the pawl 8 to permit the torque of the reel base 10 to be transmitted to the reel 11. A driving idler (not shown) for the reel base abuts against the reel base 10, as desired, to rotate the same.

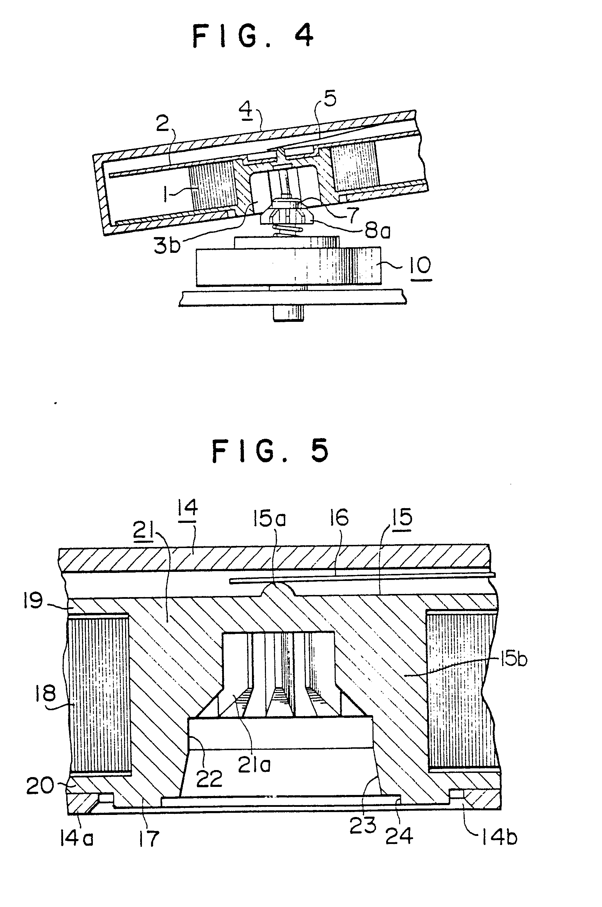

In Figure 4, the tape cassette 4 is shown as being in the course of being loaded on the reel base 10 whereupon the path along which the tape cassette 4 is moved onto the reel base 10 is not perpendicular to the reel shaft 6, but is inclined thereto or becomes arcuate one. As seen from the drawing, the inner diameter of the pawl 3b is uniform in the axial direction of the reel 11 and the inner ends of the pawls 3b are fitted on the outer periphery of the reel cap 7, so that the inner ends of the pawls 3b abut against the outer periphery of the reel cap 7 in inclined relationship therewith to wedge thereonto. The path along which the tape cassette 4 is being loaded on the reel base 10 is influenced by the path of a cassette holder (not shown) which receives the tape cassette 4 and moves toward the apparatus. In this regard, the cassette holder becomes complicated in construction in order to correctly control the path of movement of the tape cassette 4. As described above, the inner ends of the pawls 3b extend parallel to the axis of the reel shaft 6, and so the reel cap 7 should be guided parallel to the inner ends of the pawls 3b during the loading operation of the reel 11 onto the reel base 10. Thus the center of the reel 11 of the tape casette 4 must be percisely aligned relative to the reel shaft 6 and accuracy must be maintianed in association with the position of the tape cassette 4 in the cassette holder and the loading path thereof. In view of the fact that the pawls 3b engage with the reel cap 7 even when the tape cassette 4 is moved onto the reel base 10 slantwise, there may be conceivably provided an allowance for movement of the reel 11 in the tape cassette 4 in the thicknesswise direction. If such allowance were adequately provided, the tape cassette would be complicated in construction in order to maintain the positional accuracy of the reel 11 in the tape cassette 4. Accordingly, it has been desired to provide a tape cassette which permits a reel therein to be smoothly loaded on a reel base and to be accurately positioned thereon irrespective of the position of the tape cassette at the start of a loading operation thereof.

One particular attempt at providing the sought-after cassette is described in Sony US—A—3,934,839. However, there can only be simultaneous, close contact between the cylindrical portions 17, 41 and between the frustoconical surface portions 23a, 23b, as shown in Fig. 4C of the reference if there is quite high precision in the reel hub and reel base, which is not practical. In this regard, positioning must be performed by either the cylindrical portions or the frusto-conical surface portions. As explained below, this is done in the present invention. In other words, according to the present invention, the above circumstances are taken into consideration and are positively made use of such that the tape cassette of the present invention can be applied to reel bases of more than two types and different shapes to afford positioning thereon.

With the arrangement of the reference, the frustoconical surface portion 23b is intended for facilitating inserting the cylindrical portion 17 into the cylindrical socket portion 41. In this respect, the portion 23 serves only as a chambering. However, when the cylindrical portion 17 of the reel base enters the cylindrical socket portion 41 of the hub, the lowermost pawls makes such entry difficult. More specifically, when a user tries to mount the reel slantwise relative to the reel base, such action can be smooth due to the provision of frusto-conical portion of the recess in the present invention while such action is not smooth due to the interference with the pawls in the construction of the reference. In order to make such action smooth in the construction of the reference, the pawls would have to be made large with the result that the hub would become large in diameter to thereby reduce the length of tape which can be wound around the hub. Thus any advantage cannot be obtained when the pawls are provided close to the opening of the reel.

The arrangement of the reference in which the pawls are disposed below the positioning portion of the hub presents a problem in terms of the diameter of the hub and ease with which the reel can be mounted on the reel base. Such problem of the Prior Art is solved once and for all by the present invention. Moreover, the shape of the reel according to the present invention is adapted to match reel bases having various shapes. In this respect, the arrangement of the present invention in which the pawls are disposed at the top of the recess in the hub is quite meaningful. Only the shape of the reel according to the present invention enables mounting the reel on a reel base with ease even if the hub of the reel is small, and matching the reel with a plurality of reel bases.

It is an object of the invention to provide a tape cassette which receives therein reels adapted to be readily and smoothly loaded on reel bases of a magnetic recording and reproducing apparatus and to be accurately positioned thereon.

The present invention provides as a tape cassette including at least one reel rotatably received in a housing and suitable for having a magnetic tape would therearound, said housing being formed with an opening through which a reel base (which may be any one of several types) can be inserted to position and drive said reel from below, said reel having a hub formed at its center with a recess, said recess having at its underside an opening which is aligned with said housing opening, and said recess including a plurality of vanes by which said reel can be driven disposed at the innermost or top area of said recess to extend toward the center of said reel and adapted to engage a plurality of corresonding driving pawls provided on said reel base for rotating said reel, the improvement wherein the hub recess has: a first, cylindrical-shaped, reel base engaging portion provided below said vanes and having a larger diameter than the maximum diameter of said vanes; and a second, conical shaped, reel base engaging portion provided below said first, cylindrical-shaped, reel base engaging portion and having its diameter at its top corresponding to the diameter of said first, cylindrical shaped, reel base engaging portion and increasing toward below; whereby said reel is centered by said first, cylindrical-shaped, reel base engaging portion when said reel engages a reel base of one type, and said reel is centered by said second, conical-shaped, reel base engaging portion when said reel engages a reel base of another type; and wherein the hub recess is also provided with a third, cylindrical-shaped, reel base engaging portion disposed below said second, conical-shaped, reel base engaging portion to extend to the lower end of said hub recess and of a larger diameter than the maximum diameter of said second conical-shaped, reel engaging portion.

The invention also provides a tape cassette including at least one reel rotatably received in a housing and suitable for having a magnetic tape wound therearound, the housing being formed with an opening through which a reel base (which may be any one of several types) can be inserted to position and drive the reel from below, the reel having a hub containing an axial recess open to the underside and aligned with the housing opening:

the recess is in four coaxial sections, which are, in sequence,

a first, or upper, section of generally cylindrical form and having inwardly-directed radial vanes,

a second section, of genrally cylindrical form and greater diameter than the first,

a third section, of frustro-conical form positioned base down and having its upper diameter equal to the diameter of the second section, and

a fourth, or lower, section of generally cylindrical form and greater diameter than the base diameter of the third.

It will be observed that in use the reel is centered by the second recess section when the reel engages a reel base of one type, and is centered by the third recess section when the reel engages a reel base of another type.

Brief description of the drawings

Figure 1 is a cross-sectional view of essential parts of a prior tape cassette;

Figure 2 is a fragmentary, sectional view of a reel base on which the prior tape cassette is to be loaded;

Figure 3 is a fragmentary, sectional view of the prior tape cassette as loaded on the reel base;

Figure 4 is a fragmentary, sectional view of the prior tape cassette as being in the course of being loaded on the reel base;

Figure 5 is a fragmentary, sectional view of essential part of a tape cassette according to the present invention;

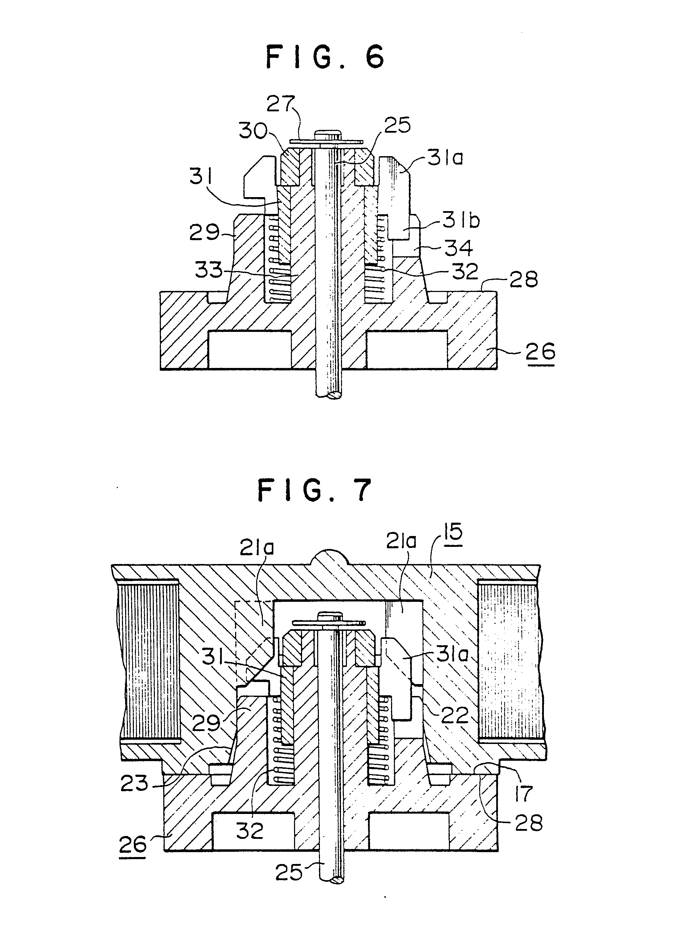

Figure 6 is a fragmentary, sectional view of a reel base on which the tape cassette of Figure 5 is to be loaded;

Figure 7 is a fragmentary, sectional view of the tape cassette as loaded on the reel base of Figure 6;

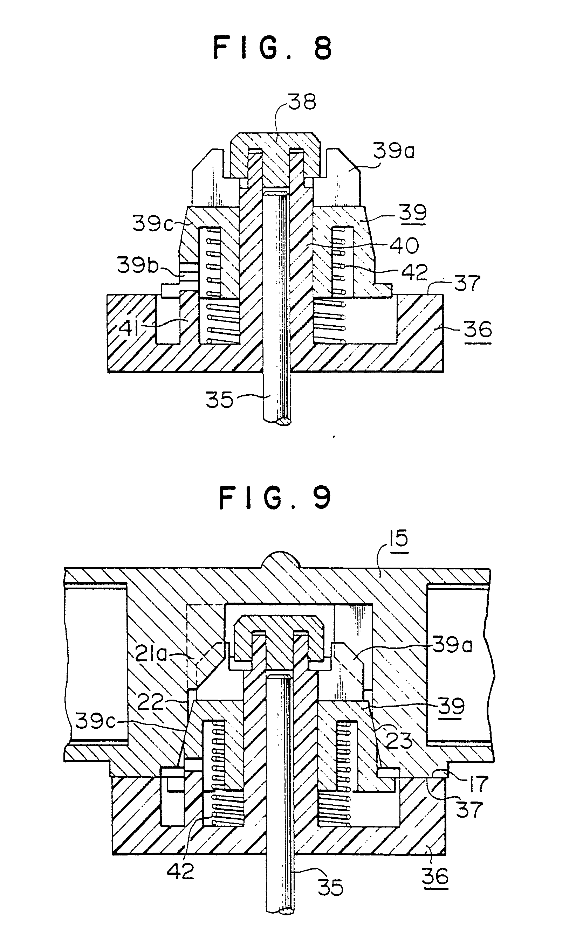

Figure 8 is a sectional view of another type of a reel base on which the tape cassette of Figure 5 is to be loaded; and

Figure 9 is a fragmentary, sectional view of the tape cassette of Figure 5 as loaded on the reel base of Figure 8.

Description of the preferred embodiments

In Figures 5 to 9, there are shown how a tape cassette according to the present invention is constructed and how the tape cassette is loaded on a reel base.

Referring now to Figure 5, there is shown a tape cassette according to the present invention in which a reel 15 is rotatably received in a housing 14 and includes a reel hub 15b provided centrally at its top with a pivot 15a. The pivot 15a is biased toward a lower portion 14a of the housing 14 by a spring 16, as in the prior tape cassette.

The reel hub 15b is formed with a recess having an opening, around which an annular abutment 17 is formed. The diameter of the abutment 17 is somewhat smaller than that of an opening 14b of formed at a lower portion 14a of the housing 14, and the abutment 17 is exposed to the outside, as shown in Figure 5. A length of tape 18 is wound around the reel hub 15b, and upper and lower flanges 19 and 20 are formed on the reel 15 in the same manner as in the prior tape cassette. Above the recess formed in the reel hub 15b are formed a plurality of reel pawls 21a which are adapted to engage with a plurality of radially extending pawls 31a on a reel base to be described hereinafter.

Below the reel pawls 21a is formed a cylindrical-shaped engaging portion 22 which is adapted to engage with a mating, engaging portion 29 of the reel base (to be described hereinbelow) to center the reel 15. Below the engaging portion 22 is formed a conical-shaped engaging portion 23 which diverges downward. A relief 24 is provided at the opening of the recess in the reel 15. Such provision of the relief 24 is because surface precision of the associated engaging surfaces can be readily obtained by making the area of the surface of the abutment 17 small.

In Figure 6, there is shown a reel base on which the tape cassette according to the present invention is loaded. A shaft 25 secured upright to a base plate (not shown) holds a body of the reel base rotatably. Washer 27 are used for preventing disengagement of the body 26 from the shaft 25, and an explanation of the arrangement is omitted. The reel base body 26 is formed with a support portion 28 for limiting the height of the reel 15 and with an engaging portion 29 in the form of a column, which engaging portion is adapted to fit in the engaging portion 22 of the reel 15 for centering thereof and is shaped at its lower portion like a frusto-cone. A stopper 30 is force-fitted on the top of the reel base body 26 to be integral therewith. A pawl member 31 having a plurality of radially extending pawls 31a is fitted on the central portion 33 of the reel base body 26 and is biased upward by a spring 32 to abut against the stopper 30. While the driving pawl member 31 is slidably movable along the outer periphery of the central portion 33 of the reel base body 26, a lower portion 31b of one of the pawls 31a extends into a notch 34 formed in the reel base body 26 to cause corotation of the reel base body 26 and the driving pawl member 31 about the shaft 25.

Referring to Figure 7, the tape cassette according to the present invention is shown as being loaded on the reel base. In the drawing, other parts except for the reel 15 are omitted for clarity. When the tape cassette is loaded on the reel base, the abutment 17 of the reel 15 rests on the supporting portion 28 of the reel base body 26, so that the level of the reel 15 is fixed. Furthermore, the cylindrical-shaped engaging portion 22 is fitted on the engaging portion 29 of the reel base body 26 to center the reel 15 relative to the axis of the reel base body 26 with the result that torque is transmitted from the reel base body 26 to the reel 15 by the engagement of the pawls 31a of the driving pawl member 31 with the reel pawls 21a. An idler (not shown) abuts against the reel base body 26, as desired, to impart torque thereto.

As shown in Figure 7, the conical-shaped engaging portion 23 on the reel 15 presents a larger opening at the lower end of the reel 15 than at the engaging portion. When the engaging portion 29 of the reel base body 26 is caused to enter into the reel 15 (that is, the reel 15 is loaded on the reel base body), the above arrangement provides an adequate allowance for the loading operation, so that even if the path of movement of the reel 15 in the course of loading is somewhat offset relative to the shaft 25 or is arcuate or slantwise thereto, the loading of the tape cassette (not shown) on the reel is smoothly effected. In case the reel pawls 21a engage with the pawls 31a of the driving pawl member 31, the loading is completed with the driving pawl member 31 depressed against the biasing force of the spring 32. Thereafter, upon the rotation of the reel base body 26, the biasing force of the spring 32 coupled with rotation of the driving pawl member 31 causes the both pawls to slip relative to each other. When phases of the both pawls are in register, the driving pawl member 31 is moved up by the force of the spring 32 to provide proper engagement for rotation of the reel 15. As the engaging portion 22 is disposed deep in the recess of the reel 15, it is hard to undergo scratches due to the contact with respective part of the reel base body 26 or fingers in the course of loading, so that positional precision of the center of rotation upon engagemenmt of the both pawls can be advantageously maintained.

In Figure 8 and 9, there is shown the manner in which the tape cassette of the present invention as shown in Figure 5 is loaded on a reel base of modified construction. Figure 8 shows a reel base, of which a reel base body 36 is rotatably mounted on a shaft 35 secured upright to a base plate (not shown). Parts for limiting movement of the reel base body in the vertical direction are omitted in the drawings for simplicity. The reel base body 36 includes a supporting portion 37 adapted to abut against the abutment 17 of the reel 15 to thereby fix the level of the reel 15, and a central portion 40 with a stopper 38 force fitted thereon. A reel drive 39 includes a frusto-conical portion 39c vertically slidably mounted on the central portion 40 of the reel body 36 and a plurality of pawls 39a. A projection 41 formed on the reel base body 36 is adapted to enter into a notch 39b formed in the reel drive 39 so as to cause the reel base body 36 and the reel drive 39 to co-rotate about the shaft 35. The reel drive 39 is upward biased by a spring 42 to be vertically positioned by the stopper 38.

In Figure 9, the tape cassette as shown in Figure 5 is shown as being loaded on the reel base of Figure 8. In the drawing, only one reel 15 is shown and other parts of the tape cassette are omitted for clarity. When the tape cassette is loaded on the reel base, the abutment 17 of the reel 15 rests on the supporting portion 37 of the reel base body 36 to fix the level of the reel 15. The pawls 21a of the reel 15 engage with the pawls 39a of the reel drive 39 to transmit torque to the reel 15. The torque is imparted to the reel base body 36 by an idler (not shown) when it contacts with the base body, as desired. In this loading position, the engaging portion 22 of the reel 15 is not in contact with any parts of the reel base body 36. As seen from Figure 9, the reel drive 39 occupies somewhat a lower position relative to the reel base body 36 than in Figure 8 such that the frusto-conical portion 39c is fitted in the conical-shaped engaging portion 23. Thus the conical-shaped surfaces are of the same vertical angle in a manner to correctly center the reel about the shaft 35, thereby holding the reel drive 39 against the biasing force of the spring 42. In this regard, the leaf spring 16 for biasing the reel 15 downward has a larger spring constant than that of the spring 42. Owing to the provision of the relief 24 at the underside of the reel 15, the shape of the frusto-conical portion 39c of the reel drive 39 is not limited to the shape as shown in the drawings, but may be, for example, a frusto-cone of a larger height. The conical-shaped engaging portion 23 is disposed deeper in the recess of the reel 15 than the relief 24 to be hard to be scratched, and obviates the need of providing any relief on the reel base.

In the embodiment as shown in Figure 8, the portion 39c to engaged by the engaging portion 23 of the reel 15 is conical-shaped, so that smooth loading can be attained even if the path of movement of the reel 15 toward the shaft 35 is not precise to some extent, if the reel pawls 21a interfere with the pawls 39a of the reel drive 39 in the course of loading, the reel drive 39 is moved downward against the force of the spring 42, and the torque of the reel base body 36 coupled with the biasing force of the spring 42 causes the reel pawls 21a to come in register with the pawls 39a of the reel drive 39, thus enabling rotating the reel 15 normally.

As described above, the tape cassette according to the present invention can be smoothly loaded on and correctly positioned on a reel base of a magnetic recording and reproducing apparatus even if the path of movement of the tape cassette toward the reel base during loading or the positional precision of the tape cassette with respect to the reel base is rough to some extent. In addition, the present tape cassette can be loaded on two types of reel bases, one of which is adapted to fit in the cylindrical-shaped engaging portion of the tape cassette to position the same in place, and the other of which is adapted to fit in the conical-shaped engaging portion of the reel of the tape cassette to position the same in place. Furthermore, according to the present invention, it is possible to simplify the construction of a cassette holder and the like, thereby reducing the weight and the manufacturing cost of a magnetic recording and reproducing apparatus.

**Claim**

A tape cassette including at least one reel (15) rotatably received in a housing (14) and suitable for having a magnetic tape wound therearound, the housing being formed with an opening (14b) through which a reel base can be inserted to position and drive the reel from below, the reel having a hub (15b) containing an axial recess open to the underside and aligned with the housing opening (14b), characterised in that:

the recess is in four coaxial sections, which are, in sequence

a first, or upper, section of generally cylindrical form and having inwardly-directed radial vanes (21a),

a second section (22), of generally cylindrical form and greater diameter than the first,

a third section (23), of frustro-conical form positioned base down and having its upper diameter equal to the diameter of the second section, and

a fourth, or lower, section (24) of generally cylindrical form and greater diameter than the base diameter of the third.

**Patentanspruch**

Bandkassette mit wenigstens einer Spule (15), die in einem Gehäuse (14) drehbar gelagert und auf die ein Magnetband aufwickelbar ist, wobei im Gehäuse eine Öffnung (14b) ausgebildet ist, durch die ein Spulensockel zum Positionieren und Antreiben der Spule von unten einführbar ist, und wobei die Spule eine Nabe (15b) mit einer zur Unterseite hin offenen und auf die Gehäuseöffnung (14b) ausgerichteten axialen Ausnehmung umfaßt, dadurch gekennzeichnet, daß:

die Ausnehmung vier koaxiale Abschnitte aufweist, nämlich aufeinander folgend

einen ersten bzw. oberen Abschnitt mit im allgemeinen zylindrischer Ausbildung und nach innen gerichteten radialen Flügeln (21a),

einen zweiten Abschnitt (22) mit im allgemeinen zylindrischer Ausbildung und einem im Vergleich zum ersten Abschnitt größeren Durchmesser,

einen dritten Abschnitt (23) kegelstumpfrörmiger Ausbildung mit nach unten gewandter Basis und einem oberen Durchmesser, der dem Durchmesser des zweiten Abschnitte entspricht, und

einen vierten Abschnitt (24) mit im allgemeinen zylindrischer Ausbildung und einem im Vergleich zur Basis des dritten Abschnitts größeren Durchmesser.

**Revendication**

Cassette pour bande magnétique, comprenant au moins une bobine (15) logée dans un boîtier (14) de façon à pouvoir tourner dans celui-ci, et sur laquelle une bande magnétique peut être enroulée, le boîtier étant pourvu d'une ouverture (14b) à travers laquelle un mandrin peut être inséré pour positionner et entrainer la bobine par en dessous, la bobine comportant un moyeu (15b) qui présente une cavité axiale ouverte vers le côté inférieur et alignée avec l'ouverture (14b) du boîtier, caractérisée en ce que la cavité comporte quatre sections coaxiales, qui sont successivement:

une première section, ou section supérieure, qui a une forme généralement cylindrique et des ailettes radiales (21a) dirigées vers l'intérieur,

une seconde section 22, qui a une forme généralement cylindrique et un plus grand diamètre que la première section,

une troisième section (23), qui a une forme tronconique, avec la grande base disposée en bas, et qui a un diamètre supérieur égal au diamètre de la seconde section, et

une quatrième section, ou section inférieure, qui a une forme généralement cylindrique et un diamètre plus grand que le diamètre de la grande base de la troisième section.

# FIG. 1

# FIG. 2

# FIG. 3

1

# FIG. 4

# FIG. 5

# FIG. 6

# FIG. 7

# F I G. 8

# F I G. 9